# EUROPÄISCHE PATENTANMELDUNG

(11) **EP 0 657 795 A2**
(43) Veröffentlichungstag der Anmeldung: **14.06.1995**
(21) Anmeldenummer: 94710011.1
(22) Anmeldetag: 02.12.1994
(51) Int. Cl.: G05B 19/35

(54) **Vorrichtung zur Steuerung von beweglichen Einrichtungen wie Rolltoren od. dgl.**

(30) Priorität: 04.12.1993 DE 4341361
(71) Anmelder: Braselmann, Klaus André, D-26506 Norden (DE)
(72) Erfinder: Krause, Rainer, D-58339 Breckerfeld (DE)
(74) Vertreter: Patentanwälte Ostriga & Sonnet

(57) **Zusammenfassung**

Dargestellt und beschrieben ist eine Vorrichtung zur Steuerung von beweglichen Einrichtungen (11) wie Rolltoren, Rolläden, Roll-, Scheren- oder Senkgittern, Senkfenstern, Schallschluckhauben, Ofentüren od. dgl., wobei mit dem Antrieb (19) der Einrichtung (11) der Abgriff eines Potentiometers (22) als Istwertgeber mechanisch gekoppelt ist, der die jeweilige Stellung der Einrichtung (11) durch einen elektrischen Wert nachbildet, mit einer elektrischen Vergleichseinrichtung, die den der jeweiligen Stellung der Einrichtung zugeordneten elektrischen Wert des Potentiometers mit einem elektrischen Vorgabewert vergleicht, und mit Schaltmitteln zum Ein- und Abschalten des Elektromotors. Die Vergleichseinrichtung umfaßt einen unstetigen Dreipunktregler (27), der mindestens drei Funktionsblöcke umfaßt, und zwar einen ersten Funktionsblock (27A), der die Regelabweichung feststellt, einen zweiten Funktionsblock (27C), der die Regelabweichung in digitale Richtungssignale (A und Z) umsetzt und einen dritten Funktionsblock (27D) mit einem elektronischen Schalter, der den ersten Funktionsblock (27A) nur solange mit dem zweiten Funktionsblock (27C) verbindet, wie ein Steuerbefehl anliegt, andernfalls der dritte Funktionsblock (27D) ein internes Referenzsignal für den zweiten Funktionsblock (27C) bildet, das einen scheinbaren Abgleich der Richtungssignale erzeugt. Erreicht wird damit, daß eine einfache Tastersteuerung mittels nur zweier Taster möglich wird und daß selbst dann, wenn die Taster geöffnet sind, dem Regler der Sollwert ständig zur Verfügung steht.

## Beschreibung

Die Erfindung betrifft eine Vorrichtung zur Steuerung von beweglichen Einrichtungen wie Rolltoren, Rolläden, Roll-, Scheren- oder Senkgittern, Senkfenstern, Schallschluckhauben, Ofentüren od. dgl.

Steuerungen, insbesondere Abschaltvorrichtungen, für derartige Einrichtungen sind zunächst in mechanischer Ausführungen bekannt und in zahlreichen Varianten in Gebrauch. Dabei werden in der Regel die Antriebe der beweglichen Einrichtungen in den beiden Endlagen mittels Schalter, wie z.B. Mikroschalter abgeschaltet. Die Schalterbetätigungsorgane für diese Endabschalter werden in den unterschiedlichsten Arten eingestellt, angeordnet und angetrieben. Ihre Justierung und Nachstellung bereitet mitunter erhebliche Probleme.

Bekannt sind weiterhin elektrische bzw. elektronische Steuerungen für bewegliche Einrichtungen, insbesondere Roll- oder Gliedertore, aber auch z.B. für elektrisch betätigte Schiebe-Hebedächer an Kraftfahrzeugen. Ein Beispiel hierzu beschreibt die DE 33 24 107 C2. Die gewünschte Stellung des Daches wird als elektrischer Sollwert mittels eines als Schiebe- oder Drehpotentiometers ausgebildeten Befehlsorgans vorgegeben. Ein mit dem Dach mechanisch gekuppeltes Potentiometer liefert ständig Istwerte, die mit dem voreingestellten Sollwert verglichen werden. Wenn mit Erreichen der gewünschten Dachstellung ein Abgleich erfolgt, wird der Antriebsmotor des Daches abgeschaltet. Im Prinzip handelt es sich also um eine einfache Nachlaufsteuerung.

Aus der DE 28 24 510, von der die Erfindung ausgeht, ist eine elektrische Steuervorrichtung für insbesondere Roll- oder Gliedertore entsprechend dem Oberbegriff des Anspruchs 1 bekannt. Ein Wendelpotentiometer, dessen Schleifer synchron von der Motorwelle angetrieben wird, bildet die jeweilige Stellung des Tores durch einen elektrischen Wert nach, der mittels einer elektronischen, zwei Entscheidungsstufen umfassenden Auswerteschaltung mit voreingestellten Sollwerten, d.h. mit einem minimalen und einem maximalen, den beiden Torendstellungen entsprechenden elektrischen Wert verglichen wird und bei Erreichen eines der beiden Sollwerte den Antriebsmotor des Tores unabhängig von den Schaltaggregaten abschaltet. Diese Schaltung betrifft nur die Endabschaltung eines Tores als solche.

Bei den herkömmlichen Steuerungen mechanischer oder elektrischer Art bedingt das sich mit der Betriebsdauer, dem Alter und den Betriebsbedingungen wie Temperatur-, Feuchtigkeitsschwankungen u.dgl. ändernde Nachlaufverhalten bewegbarer Einrichtungen von Zeit zu Zeit eine Nachstellung bzw. Neukalibrierung der Endabschalteinrichtungen. Dieses Problem ist in besonderem Maße kritisch bei Einrichtungen, deren Schließ- und/oder Offenstellung besonderen, konstanten Kriterien gehorchen muß, wie etwa der Schließdruck einer Ofentüre. Da die Nachstellung lästig ist, wird sie, soweit vom System toleriert, häufig unterlassen, so daß dann die bewegbare Einrichtung nicht mehr unter optimalen Bedingungen läuft und sogar Schaden nehmen oder anrichten kann.

Ein wesentliches Ziel der Erfindung ist es folglich, eine relativ einfache Steuervorrichtung anzugeben, die trotz des unvermeidbaren mechanischen Nachlaufs beweglicher Einrichtungen ein darauf abgestimmtes Nachjustieren oder Neukalibrieren der Endabschaltungen nicht mehr erfordert.

Die Erfindung löst diese Aufgabe in erster Linie und im wesentlichen dadurch, daß die Steuerung entsprechend dem Anspruch 1 mittels eines modifizierten Dreipunktreglers als besondere Regelsteuerung ausgelegt ist. Die erfindungsgemäßen Merkmale bewirken, daß eine einfache Tastersteuerung mittels nur zweier Taster (einen für den Befehl AUF, den anderen für den Befehl ZU) möglich wird und daß selbst dann, wenn die Taster geöffnet sind, dem Regler der Sollwert ständig zur Verfügung steht. Dadurch wird zugleich sichergestellt, daß die Steuerung den mechanischen Nachlauf ausregeln kann, so daß die bewegbare Einrichtung schließlich stets ihre vorbestimmten Endlagen exakt einnimmt, ohne daß es selbst bei sich ändernden Verhältnissen noch irgendeiner Nachjustierung von Einstellelementen wie Schaltern oder Trimmpotentiometern bedarf.

Weitere vorteilhafte und zweckmäßige Merkmale ergeben sich aus den Unteransprüchen sowie aus der nachfolgenden Beschreibung der Erfindung anhand der beiliegenden Zeichnungen.

Hervorzuheben sind insbesondere eine Laufgeschwindigkeitsüberwachung der bewegbaren Einrichtung in ihren beiden Bewegungsrichtungen sowie eine außerordentlich einfache Einrichteprozedur unter Verwendung eines mit Rutschkupplung ausgerüsteten Istwertpotentiometers, wie später erläutert.

Zur Laufgeschwindigkeitsüberwachung der bewegbaren Einrichtung ist ein Funktionsblock vorgesehen, der die Geschwindigkeit der sich veränderbaren Potentiometerspannung überwacht, mit zwei Differenziergliedern, von denen eines zur Verhinderung des 'Durchdrehens' oder 'Durchgehens' dU/dt → ∞ und das andere zur Antriebsabschaltung im Falle extremer Schwergängigkeit oder Blockierens dU/dt → 0 differenziert, mit einer nachgeordneten Komparatorstufe, deren Ausgangssignal unabhängig vom Dreipunktregler und unabhängig von Sicherheitskomparatoren eine Sicherheitsabschaltung herbeiführt, wobei eine vorgeschaltete Anlaufüberbrückung ein Hochlaufen des Motors in der Anlaufphase bis zu seiner Nenndrehzahl zuläßt. Hiermit steht eine zuverlässige zusätzliche Sicherheitsabschaltung für extreme Betriebsbedingungen, selbst bei Ausfall des Regelkreises, zur Verfügung, die herkömmliche Überlastabschaltungund mechanische Fangvorrichtungen ersetzt.

In den Zeichnungen zeigen:
- Fig. 1: eine schematische Darstellung der Abbildung des Verfahrweges eines Rolltores auf den Verstellweg eines Potentiometers als Absolutgeber,
- Fig. 2: eine grob schematische Darstellung wesentlicher Teile der Steuerung und der Schaltvorrichtung,
- Fig. 3: eine detailliertere Darstellung der in Fig. 2 skizzierten Schaltungsanordnung,
- Fig. 4: einen zusätzliche Abgleichpotentiometer erläuternden Schaltungsteil,
- Fig. 5: eine Ansteuerschaltung für die Wendeschütze des Antriebsmotors,
- Fig. 6: eine schematische Darstellung der Laufgeschwindigkeitsüberwachung der bewegbaren Einrichtung, und

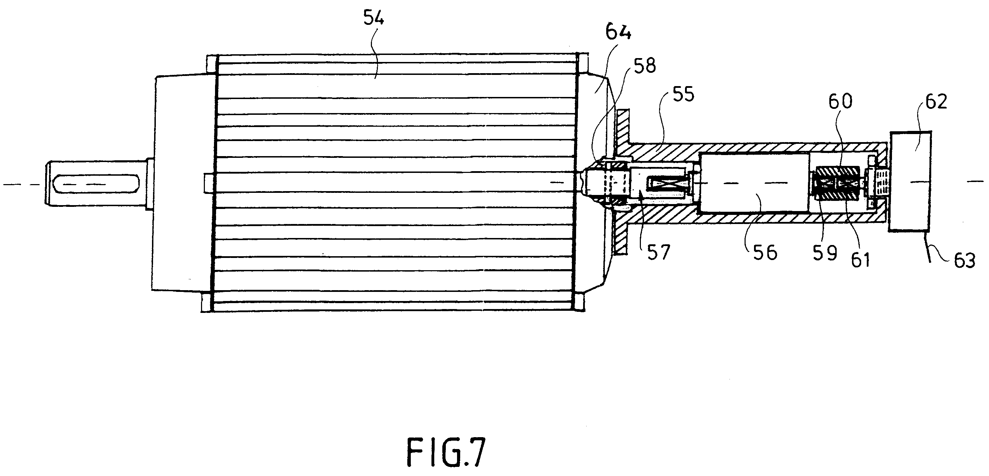

- Fig. 7: eine einem Antriebsmotor zugeordnete konkrete Anordnung eines Potentiometers als Absolutgeber.

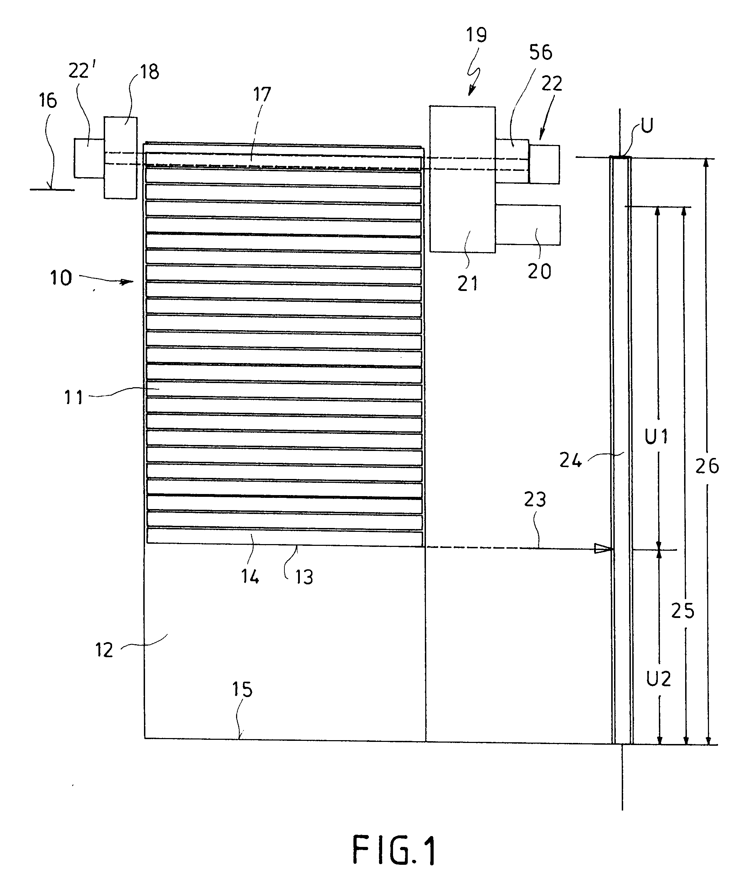

Fig. 1 zeigt ein insgesamt mit 10 bezeichnetes Rolltor, dessen Panzer 11 zum Verschluß einer Gebäudeöffnung 12 dient. Der Panzer kann zwischen einer Schließstellung und einer Offenstellung verfahren werden, wobei in der Schließstellung die Unterkante 13 der untersten Panzerlamelle 14 auf den Boden 15 aufgestoßen ist. Die maximale Offenstellung ist im Extremfall durch den vorhandenen, nicht dargestellten Gebäudesturz definiert und in Fig. 1 mit 16 bezeichnet.

In üblicher Weise wird der Panzer 11 auf eine nicht näher dargestellte Wickeltrommel aufgewickelt, deren Wickelwelle mit 17 bezeichnet ist. Das eine Ende der Wickelwelle 17 lagert in einem raumfest angebrachten Lager 18, das andere in einer Motor-Getriebe-Antriebseinheit, die insgesamt schematisch mit 19 dargestellt ist und einen elektrischen Antriebsmotor 20 sowie ein Leistungs-Untersetzungsgetriebe 21 umfaßt, welches die relativ hohe Motordrehzahl in eine geeignete Wickelgeschwindigkeit für den Panzer 11 umsetzt.

Zur Steuerung und Abschaltung mindestens der Endlagen des Rolltorpanzers 11 in der Schließstellung (bei 15) und in der betriebsmäßigen maximalen Offenstellung (bei 16) ist ein Absolutgeber vorgesehen, insbesondere ein Drehpotentiometer 22, dessen den Abgriff 23 (Schleifer) bewegende Spindel unter Zwischenschaltung eines Untersetzungsgetriebes 56 mit der Wickelwelle 17 mechanisch verbunden ist. Das Untersetzungsgetriebe 56 sorgt mechanisch dafür, daß der maximal mögliche Verstellweg des Rolltorpanzers 11 auf das Potentiometer abgebildet wird. Mit anderen Worten: das Getriebe 56 weist eine derartige Übersetzung auf, daß bei einer Bewegung der Unterkante 13 oder untersten Lamelle 14 des Panzers 11 zwischen der Geschlossenstellung 15 und der Offenstellung 16 der Schleifer 23 des Potentiometers 22 sich selbstverständlich nur innerhalb der Widerstandsbahn 24 bewegt, die in Fig. 1 schematisch als Abwicklung dargestellt ist. Aus Sicherheitsgründen ist der tatsächliche gesamte Verstellweg 25 des Schleifers 23 etwas kleiner eingerichtet als die Gesamtlänge 26 der Widerstandsbahn 24.

Auf der linken Seite der Fig. 1 ist mit 22' ein Multiturn- bzw. Mehrwendelpotentiometer bezeichnet, welches alternativ anstelle des einfachen Potentiometers 22 und des für ihn benötigten Untersetzungsgetriebes 23 vorgesehen sein kann. Selbstverständlich ist die Spindel auch dieses Potentiometers 22' mechanisch mit der Wickelwelle 17 verbunden, jedoch ist hier eine Zwischenübersetzung nicht erforderlich, da der Schleifer dieses Mehrwendelpotentiometers 22' entsprechend viele Spindelumdrehungen seines Abgriffes benötigt, um seine Widerstandsbahn zu überstreichen.

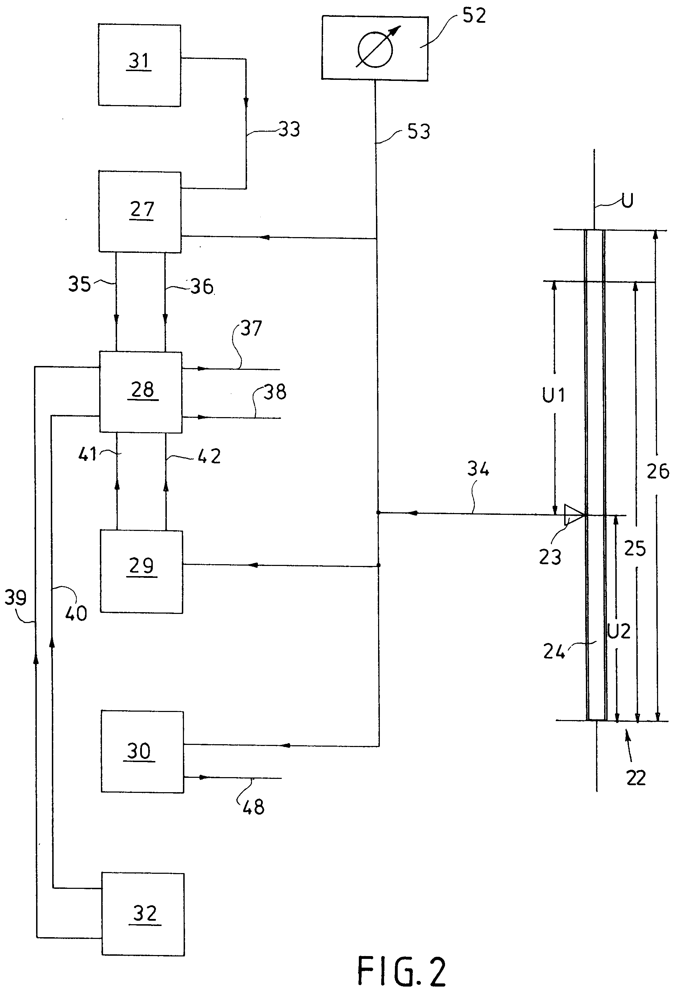

Wesentlich ist, daß jede beliebige Stellung zwischen den Endstellungen des Panzers 11 des Rolltores 10 und einschließlich dieser einer definiert zugeordneten Stellung des Abgriffs (Schleifer) 23 des Potentiometers 22 bzw. 22' entspricht. Wegen der Funktion des Potentiometers als Spannungsteiler erzeugt daher jede beliebige Rolltorstellung eine spezifischen Teilspannung U1 bzw. U2 der Betriebsspannung U des Potentiometers. Die Teilspannung U1 oder die Teilspannung U2 läßt sich zur Steuerung und Abschaltung der Einrichtung verwenden. Dazu wird zunächst auf Fig. 2 verwiesen.

Hier ist die Widerstandsbahn 24 des Potentiometers 22 erneut als Abwicklung dargestellt mit 25 als Regelbereich und 23 als Abgriff bzw. Schleifer. Die mit 27, 28, 29 und 30 bezeichneten, schematisch dargestellten Schaltungsblöcke sind Teil der eigentlichen Steuerelektronik, die die Aufgabe hat, Signale der Funktionsblöcke 31 und 32 sowie des Istwertpotentiometers 22 zu verarbeiten.

Dabei ist 27 ein - wie nachstehend im einzelnen erläutert - modifizierter unstetiger Dreipunktregler. Die zulässige Toleranz seiner Regelabweichung ist mit einem nicht dargestellten Trimmer einstellbar. Funktionsblock 31 ist ein Sollwertgeber, der beispielsweise durch Tastendruck "AUF" bzw. mittels Taster "AB" gesetzt wird. Er liefert ein Sollwert-Stromsignal 33 von beispielsweise 4 bis 20mA, welches in ein proportionales Spannungssignal umgewandelt wird. Dieses Spannungssignal und das Istwertsignal 34 des Absolutgeber (Istwertpotentiometers 22) werden verglichen und die positive oder negative Regelabweichung auf die Ausgangsleitungen 35 und 36 gegeben. Da das Ausgangssignal eines unstetigen Reglers unstetig ist, wird hiermit auf einfache Weise ein Richtungssignal für den Funktionsblock 28 erzeugt, der über Ausgangsleitungen 37 und 38 den Antriebsmotor der Einrichtung ansteuert, wie es weiter unten näher beschrieben wird.

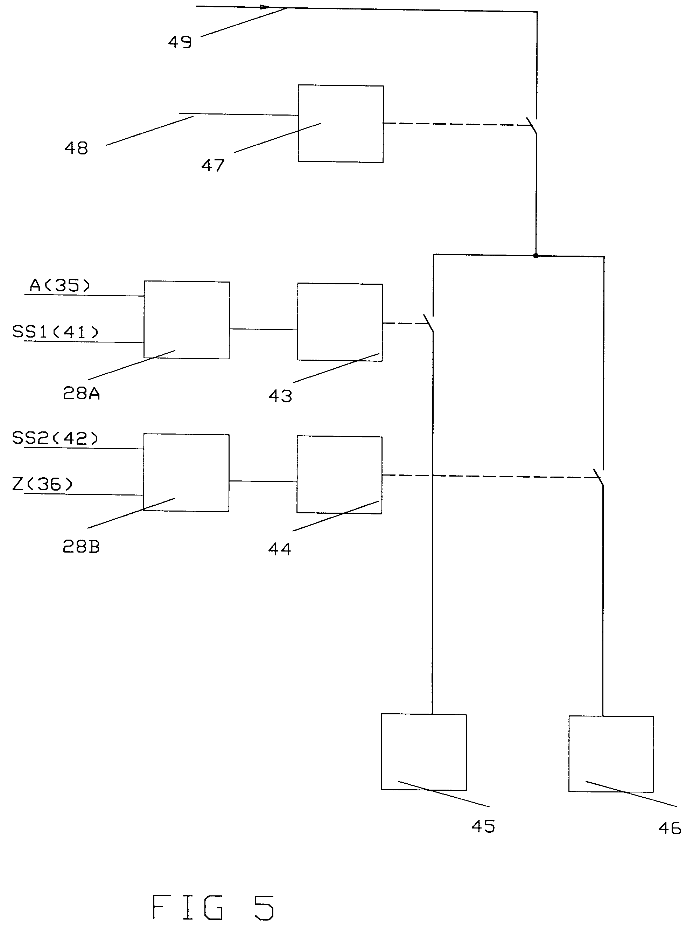

Der Funktionsblock 32 stellt ein Terminal für Tastenbetätigung dar, aus dem ebenso wie aus dem Funktionsblock 27 Richtungssignale 39 und 40 erzeugt werden. Zusammen mit den Freigabeleitungen 41 und 42 aus dem Funktionsblock 29 werden durch eine UND-Funktion die Ausgangsleitungen 37 und 38 des Funktionsblocks 28 aktiviert und steuern so - siehe Fig. 5 - Richtungsrelais 43 und 44 an, und diese wiederum die Wendeschütze 45 und 46 des Motors 20.

Der in Fig. 2 mit 30 bezeichnete Funktionsblock steht für Differenzierglieder für die Funktion dU/dt und überwacht die Bewegung der Einrichtung, also z.B. des Rolltorpanzers 11 aus Fig. 1. Die Differenzierglieder haben die Aufgabe, bei gesetztem Bewegungsbefehl für den Panzer 11 den Motor 20 abzuschalten, wenn dU/dt gegen 0 oder dU/dt gegen ∞ festgestellt wird, welche Tatbestände auf gravierende Defekte rückschließen lassen.

In Fig. 2 ist als Option noch eine ggf. an einem entfernten Ort befindliche Stellungsanzeige 52 gezeigt, an der sich der jeweilige effektive Stand der zu bewegenden Einrichtung, so also beispielsweise der Stand der Unterkante 13 der untersten Lamelle 14 eines Rolltores 11, ablesen läßt. Diese Anzeige 52 kann über eine längere Leitung 53 auch an vom Antrieb oder von der Elektronik fernliegender Stelle, so z.B. in einem Überwachungsraum, installiert werden.

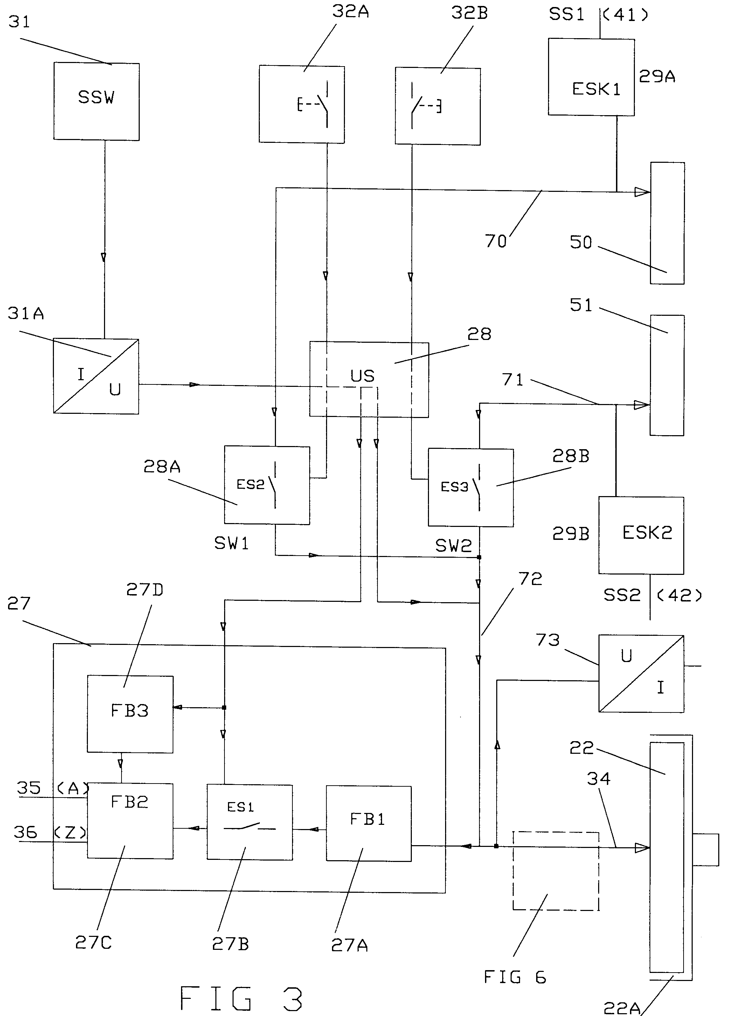

Im gegenüber Fig. 2 detaillierteren Schaltbild der Fig. 3 sind Einzelheiten des modifizierten Dreipunktreglers 27 verdeutlicht. Der Regler 27 ist so ausgelegt, daß nicht nur der Istwert 34 des Potentiometers 22, sondern auch der Sollwert 72 ständig anliegt. Erreicht wird dies wie folgt:

Der Regler 27 wird mittels eines elektronischen Schalters 27B (ES1) zunächst in zwei Funktionsblöcke 27 (27A) und 27C (27C) getrennt, von denen Funktionsblock 27A die Regelabweichungen feststellt und Funktionsblock 27C sie in digitale Richtungssignale 35 (Z.B. A für AUF) und 36 (z.B. Z für ZU) auswertet. Ist der elektronische Schalter 27B jedoch geöffnet, bewirkt ein internes Referenzsignal in einem dritten Funktionsblock 27D (FB3), als wäre keine Regelabweichung vorhanden. Dadurch wird dem Funktionsblock 27C ein scheinbarer Abgleich von Ist- und Sollwert vorgetäuscht; die Ausgangssignale 35 und 36 sind stromlos.

Wird hingegen durch einen der Taster 32A, 32B ein Fahrbefehl in beliebiger Richtung (AUF oder ZU) gegeben, aktiviert dieser eine elektronische Umschaltstufe 28 (US), schließt 27B und setzt die Regelung in ihre normale Funktion.

Die Spannungen der Sollwertsignale 70, 71 für die Endstellungen des Rolltors werden von den beiden Einstelltrimmern 50 und 51 zweier mit 29A, 29B bezeichneter Endstellungs-Komparatoren gewonnen und mittels elektronischer Schalter 28A (ES2) und 28B (ES3) als Sollwert SW1 oder als Sollwert SW2 aufgeschaltet. Selbstverständlich trimmen die Einstellpotentiometer 50, 51 den Schaltbereich der Endstellungskomparatoren außerhalb des üblichen Regelbereichs ein, da eine Sicherheit im wesentlichen für den Fall des Versagens des Regelkreises beabsichtigt ist.

Ebenso kann auch ein von außen zugeführtes, stetig anliegendes Strom-Sollwertsignal (31) über die elektronische Umschaltstufe 28 (US) bewirken, daß der Schalter 27B (ES1) geschlossen wird.

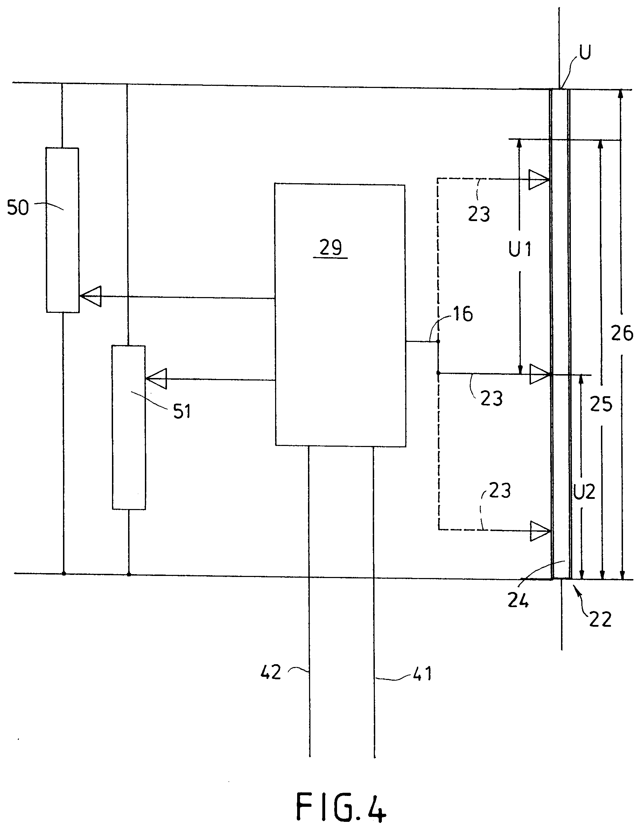

Fig. 4 veranschaulicht vereinfacht den Gesamtzusammenhang der zusätzlichen elektronischen Sicherheitsschalter (SS1 und SS2 in Fig. 3). Die jeweilige Wirkungsweise ist folgende:

An dem Absolutgeber (Istwertpotentiometers 22) und den Einstelltrimmern 50 und 51 liegt die gleiche Versorgungsspannung an. Die Signalspannung 16 des Absolutgeber 22 wird mit den Schleiferspannungen der Einstelltrimmer 50 und 51 verglichen und nach dem Prinzip der Wheatstonschen Brücke von dem Funktionsblock 29, einem Komparator, als Richtungs-Freigabesignale ausgewertet. Die Einstelltrimmer 50 und 51 werden so eingestellt, daß die Fahr-Endstellungen des Absolutgeber 22 im jeweiligen Brückenzweig abgeglichen sind. Das geschieht immer dann, wenn der Schleifer 23 des durch die Bewegung der Einrichtung (z.B. also die Rolltorbewegung) angetriebenen Absolutgeber sich solange in die jeweilige Verfahrrichtung bewegt, bis ein Brückenabgleich erfolgt. Ein Brückenabgleich bewirkt jeweils ein Sperren des Richtungs- und Freigabesignals 41 oder 42.

Somit sind die Einrichtungen SS1 und SS2 Sicherheits-Endabschalter, die eine zuverlässige Endlagenabschaltung des Motors auch dann noch gewährleisten, wenn, z.B. bei einem Defekt des Reglers, aufgrund der Werte des Sollwertgebers 31 noch Verfahrbedarf für die bewegbare Einrichtung gemeldet würde.

Fig. 5 zeigt einen Stromlaufplan der Rolltorsteuerung. Die Funktionsblöcke 45 und 46 stellen die Motorwendeschütze der Steuerung dar. Angesteuert werden sie von Schaltkontakten der Funktionsblöcke 43 und 44 und dem Schaltkontakt des Funktionsblocks 47. Die Schaltspannung ist mit 49 bezeichnet. Die Funktionsblöcke 28A und 28B sind UND-Schaltungen mit den Eingängen A und Z bzw. 35 und 36 vom Dreipunktregler 27. bzw. dessen Funktionsblocks 27C und den Eingängen SS1 und SS2 von den Sicherheitsendschaltern 41 und 42. Funktionsblock 47 hat im wesentlichen dir Funktion eines Sicherheitsrelais, das vom Differenzierglied 30 angesteuert wird. Mit den Richtungsrelais 43 und 44 bildet es eine Reihenschaltung, so daß bei Funktionsstörungen der Elektronik oder des Absolutgeber 22 immer eine sichere Abschaltung der Wendeschütze 34 und 35 gewährleistet ist.

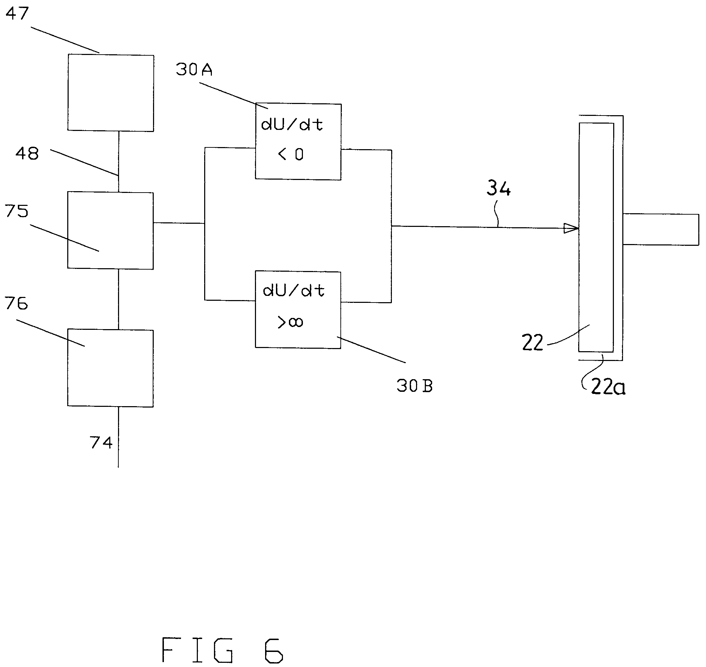

Zur Regelung der Bewegungsgeschwindigkeitsüberwachung der bewegbaren Einrichtung sei auf Fig. 6 näher verwiesen: Die Istwertspannung 34 wird direkt auf zwei Differenzierglieder 30A, 30B gegeben, von denen das eine Differenzierglied 30A die Eingangsspannung gegen 0 differenziert (wobei die Höhe der differenzierten Spannung an einem nicht dargestellten Widerstand einstellbar ist), und das andere Differenzierglied 30B die Eingangsspannung gegen ∞ differenziert (wobei auch die Höhe dieser differenzierten Spannung mittels Einstellwiderstand bestimmbar ist).

Gerät die Geschwindigkeit, mit der sich die Einrichtung 11 bewegt, außerhalb festgelegter Grenzen, erfolgt durch eine Komparatorstufe 75 und nachfolgend durch das Sicherheits-Hauptrelais 47 eine Abschaltung des Motors 20. Eine vorgeschaltete, vom Schaltsignal 74 angesteuerte Anlaufüberbrückung 76 ermöglicht ein Hochlaufen des Motors in der Anlaufphase bis zu seiner Nenndrehzahl. Sie überbrückt die Funktion des Komparator 75.

Verwendet man als Istwertgeber ein Drehpotientometer 22 mit einer Rutschkupplung seines Schleifers, ist eine überaus einfache Toreinrichtung wie folgt möglich:

Zunächst wird die mechanische Verbindung des Potentiometers von der Motorwelle gelöst und der Schleifer an einen Endanschlag gedreht, damit die unterste Fahrstellung der Einrichtung sicher erreicht werden kann. Dann wird die Potentiometer-Schleiferwelle zum synchronen Antrieb mit der Motor- oder Getriebewelle verbunden. Nun fährt man das Tor mittels Schutzbrücke in seine unterste Stellung, und fährt anschließend mittels Justage des Trimmpotentiometers 50 des oberen Sicherheitsendschalters das Tor in seine obere Endstellung. Damit hat der Schleifer des Potentiometers seinen bestimmungsgemäßen Weg selbsttätig gefunden, und die Torsteuerung ist eingerichtet.

Es ist in der praktischen Anwendung insbesondere daran gedacht, den Abgriff des Sollwertgebers 22 (Schleifer eines Drehpotentiometers) direkt von der Wickelwelle 17 mechanisch anzutreiben. Der Vorteil besteht darin, daß der Rolltorpanzer 11, ggf. über eine Wickeltrommel, direkt mit dieser Welle gekuppelt ist, so daß sich Bewegungen des Panzers in der Regel zwangsläufig in Bewegungen der Wickelwelle 17 ausdrücken.

Insbesondere für Einrichtungen, die keine Aufwicklung des bewegbaren Teiles der Einrichtungen aufweisen, also z.B. bei Senkfenstern, kann es sinnvoll sein, den Absolutgeber 22 in unmittelbarer Nähe des Antriebsmotors anzuordnen. Ein Beispiel dafür zeigt Fig. 5. Hier ist am sogenannten B-Schild 64 eines Elektromotors 54 ein Gehäuse 55 angeflanscht. Dieses Gehäuse 55 beinhaltet ein vorzugsweise als Planetengetriebe ausgebildetes Untersetzungsgetriebe 56, welches über Steckkupplungsmittel 57 mit der Motorwelle 58 auf Drehmitnahme gekuppelt ist. Die Getriebe-Ausgangswelle 59 ist über eine Wellenkupplung 60 mit der Stellspindel 61 eines Drehpotentiometers 62 auf Drehmitnahme verbunden. So kann auf einfache Weise die gesamte im Gehäuse 55 untergebrachte Einrichtung an das Wellenende 58 des Motors 54 angesteckt und an das B-Schild 53 angeflanscht werden. Der elektrische Anschluß ist dann lediglich noch an den Anschlußfahnen 63 des Potentiometers 62 vorzunehmen.

Verwendet man als einen der einfachsten Absolutgeber ein Drehpotentiometer mit einem Schleiferweg von knapp unter 360°, so ist vorgesehen, daß der Abgriff des Potentiometers an ein Untersetzungsgetriebe angeschlossen ist, welches an die Motorwelle oder an die Getriebewelle des Antriebs oder an die Wickelwelle der Einrichtung angeschlossen ist. Dieses Untersetzungsgetriebe sorgt dafür, daß die Anzahl einer dem vollen Öffnungshub entsprechenden Umdrehungen der Motorwelle, der Getriebewelle oder der Wickelwelle in den maximal möglichen Drehweg der Potentiometerspindel bzw. des Abgriffes umgesetzt werden. So kann beispielsweise die Wickelwelle eines Rolltores für die Bewegung des Rolltorpanzers von der Schließstellung in die Offenstellung etwa 10 Umdrehungen benötigen. Diese 10 Umdrehungen werden dann durch das Getriebe so untersetzt, daß die Spindel des Potentiometers mit Sicherheit nur innerhalb ihres möglichen Drehweges durch die Wickelwelle verstellt werden kann.

Ein solches Getriebe kann verzichtbar sein, wenn das Potentiometer als Multiturn- bzw. Mehrwendelpotentiometer ausgeführt und sein Abgriff unmittelbar an die Motorwelle, an die Getriebewelle oder an die Wickelwelle der Einrichtung angeschlossen ist. Im Handel sind z.B. solche Potentiometer erhältlich, deren gesamter Verstellweg 10 Umdrehungen der Stellspindel erfordert. Dieser Wert ist sehr günstig für Rolltore, denn eine Vielzahl von Rolltoren üblicher Dimensionen benötigen für die Aufwicklung des Panzers weniger als 10 Wickelwellen-Umdrehungen.

Es kann als Absolutgeber auch ein Seilzugpotentiometer vorgesehen sein, dessen freies Seilende an oder nahe der freien Kante des verfahrbaren Einrichtungsteiles befestigt ist. Hierbei entfällt der Antrieb des Schleifers des Potentiometers durch ein rotatorisch angetriebenes Teil, und der Verstellweg des Potentiometers wird unmittelbar mit dem zu bewegenden Teil der Einrichtung synchronisiert. Hiermit ist auch eine unmittelbare Bewegungsüberwachung des bewegten Teiles selbst möglich.

Sofern im Zusammenhang mit dem Istwertgeber von einem Potentiometer die Rede ist, sei erwähnt, daß stattdessen auch andere Absolutgeber in Betracht kommen können, wenngleich ein Potentiometer als derzeit am besten zur Verwirklichung der Erfindung infrage kommende Bauteil erscheint.

## Patentansprüche

1. Vorrichtung zur Steuerung von beweglichen Einrichtungen (11) wie Rolltoren, Rolläden, Roll-, Scheren- oder Senkgittern, Senkfenstern, Schallschluckhauben, Ofentüren od. dgl., wobei mit dem Antrieb (19) der Einrichtung (11) der Abgriff eines Potentiometers (22) als Istwertgeber mechanisch gekoppelt ist, der die jeweilige Stellung der Einrichtung (11) durch einen elektrischen Wert nachbildet, mit einer elektrischen Vergleichseinrichtung, die den der jeweiligen Stellung der Einrichtung zugeordneten elektrischen Wert des Potentiometers mit einem elektrischen Vorgabewert vergleicht, und mit Schaltmitteln zum Ein- und Abschalten des Elektromotors, dadurch gekennzeichnet, daß die Vergleichseinrichtung einen unstetigen Dreipunktregler (27) umfaßt, der mindestens drei Funktionsblöcke umfaßt, und zwar einen ersten Funktionsblock (27A), der die Regelabweichung feststellt, einen zweiten Funktionsblock (27C), der die Regelabweichung in digitale Richtungssignale (A und Z) umsetzt und einen dritten Funktionsblock (27D) mit einem elektronischen Schalter, der den ersten Funktionsblock (27A) nur solange mit dem zweiten Funktionsblock (27C) verbindet, wie ein Steuerbefehl anliegt, andernfalls der dritte Funktionsblock (27D) ein internes Referenzsignal für den zweiten Funktionsblock (27C) bildet, das einen scheinbaren Abgleich der Richtungssignale erzeugt.

2. Abschaltvorrichtung nach Anspruch 1, dadurch gekennzeichnet, daß zur maximalen Sollwertvorgabe Einstellpotentiometer (50, 51) für den oberen und den unteren Grenzwert vorgesehen sind und die Befehlsorgane (32A, 32B) mittels elektronischer Schalter (28A, 28B) diese als Sollwertvorgaben auf den Regler 27 aufschalten.

3. Vorrichtung nach Anspruch 2, dadurch gekennzeichnet, daß Sicherheits-Endstellungskomparatoren (29A, 29B) vorgesehen sind, deren Schaltwerte mittels derselben Einstellpotentiometer (50, 51) eingestellt sind.

4. Vorrichtung nach Anspruch 1, dadurch gekennzeichnet, daß ein Funktionsblock (29) zur Überwachung der Laufgeschwindigkeit der Einrichtung (11) vorgesehen ist mit zwei Differenziergliedern (30A, 30B), von denen eines dU/dt → ∞ und das dU/dt0 differenziert, mit einer nachgeordneten Komparatorstufe (26), deren Ausgangssignal unabhängig von dem Dreipunktregler (27) und unabhängig von den Sicherheitskomparatoren (29A, 29B) eine Sicherheitsabschaltung herbeiführt, und eine vorgeschaltete Anlaufüberbrückung ein Hochlaufen des Motors in der Anlaufphase bis zu seiner Nenndrehzahl zuläßt.

5. Abschaltvorrichtung nach einem der vorhergehenden Ansprüche, dadurch gekennzeichnet, daß die vom Absolutgeber (22, 22') gelieferte Spannung einer Anzeige (52) zugeführt wird, die die Ist-Stellung der Einrichtung (11) ggf. fernanzeigt.

6. Abschaltvorrichtung nach Anspruch 1, dadurch gekennzeichnet, daß der Abgriff (23) des Absolutgeber (Potentiometers 22) an ein Untersetzungsgetriebe (56) angeschlossen ist, welches an die Motorwelle (58), die Getriebewelle (59) des Antriebs (19) oder an die Wickelwelle (17) der Einrichtung angeschlossen ist.

7. Abschaltvorrichtung nach Anspruch 1, dadurch gekennzeichnet, daß der Absolutgeber als Multiturn- bzw. Mehrwendelpotentiometer (22') ausgeführt und sein Abgriff unmittelbar an die Motorwelle, an die Getriebewelle oder an die Wickelwelle der Einrichtung (11) angeschlossen ist.

8. Abschaltvorrichtung nach Anspruch 1, dadurch gekennzeichnet, daß als Absolutgeber ein Seilzugpotentiometer vorgesehen ist, dessen freies Seilende an oder nahe der freien Kante (13) des verfahrbaren Einrichtungsteils (11) befestigt ist.
